# EUROPÄISCHE PATENTSCHRIFT

(11) **EP 2 148 185 B1**
(45) Veröffentlichungstag und Bekanntmachung des Hinweises auf die Patenterteilung: **13.03.2013**
(21) Anmeldenummer: 09008411.2
(22) Anmeldetag: 26.06.2009
(51) Int. Cl.: G01N 21/85, G01N 21/31, G01N 9/02, G01N 33/02, G01N 5/00, G01N 15/00

(54) **Messgerät und Verfahren zur Messung von Eigenschaften einer partikulären Probe**
Measuring device and method for measuring characteristics of a particulate sample
Appareil de mesure et procédé de mesure de caractéristiques d'un échantillon particulier

(30) Priorität: 21.07.2008 DE 102008033979
(43) Veröffentlichungstag der Anmeldung: 27.01.2010
(73) Patentinhaber: Bruins, Hans Joachim, 81247 München (DE)
(72) Erfinder: Bruins, Hans Joachim, 81247 München (DE)
(74) Vertreter: Hertz, Oliver

(56) Entgegenhaltungen:
- WO-A1-99/58959
- DE-A1- 10 119 763
- DE-A1-102005 052 769
- US-B1- 6 646 264

## Beschreibung

Die Erfindung betrifft ein Messgerät zur Messung von Eigenschaften einer Probe, die eine Vielzahl von Partikeln umfasst, wie zum Beispiel einer Pflanzenprobe, insbesondere einer Getreideprobe, wobei das Messgerät mit einer Spektroskopieeinrichtung ausgestattet ist, mit der spektroskopische Eigenschaften der Probe messbar sind. Die Erfindung betrifft des Weiteren ein Verfahren zur Messung von Eigenschaften einer Probe, die eine Vielzahl von Partikeln umfasst, wobei eine Messung von spektroskopischen Eigenschaften der Probe mit einer Spektroskopieeinrichtung vorgesehen ist. Anwendungen der Erfindung sind bei der Charakterisierung von partikulären Proben, insbesondere bei der Charakterisierung von Pflanzenproben, z. B. von Getreide gegeben.

Es ist bekannt, den physikalischen und chemischen Zustand von Getreide durch die Messung spektroskopischer Eigenschaften des Getreides zu charakterisieren. Beispielsweise kann durch eine spektroskopische Messung der Proteingehalt des Getreides ermittelt werden. Die spektroskopische Messung wird typischerweise nicht an einzelnen Getreidekörnern, sondern an einer Probe mit einer Vielzahl von Getreidekörnern durchgeführt. Messgeräte, die für die spektroskopische Messung an Getreide ausgelegt sind, werden zum Beispiel in DE 101 197 63 A1 und in DE 103 32 800 A1 beschrieben.

Die Anwendung der herkömmlichen Messgeräte ist auf die spektroskopische Messung beschränkt. In der Praxis kann sich dies als nachteilig erweisen, da häufig weitere Eigenschaften, wie zum Beispiel das spezifische Gewicht der Getreidekörner, ermittelt werden sollen, die nicht unmittelbar aus den spektroskopischen Eigenschaften ableitbar sind. Somit sind weitere Messungen erforderlich, für die eine Probe von dem spektroskopischen Messgerät in ein weiteres Gerät überführt oder ggf. in einem anderen Präparationszustand (z.B. größere Probenmengen) bereitgestellt werden muss.

Die Messung des spezifischen Gewichts von Getreide ist beispielsweise für die Feststellung eines Insektenbefalls oder für eine genaue Charakterisierung des Feuchtigkeitsgehalts erforderlich. Bei Insektenbefall enthält die Probe hohle Getreidekörner, die mit der spektroskopischen Messung nicht identifizierbar sind. Beispielsweise hat gesunder Weizen ein spezifisches Gewicht von 80 kg/hl. Eine Unterschreitung dieses Wertes kann auf einen Insektenbefall hinweisen.

Bisher ist es in der Praxis üblich, das spezifische Gewicht von Getreide zu messen, indem eine Getreideprobe in einem Messrohr mit einem vorbestimmten Volumen gewogen wird. Dieses Verfahren hat mehrere Nachteile. Erstens wird ein erheblich größeres Probenvolumen benötigt, als dies für die spektroskopische Messung erforderlich ist. Es ergibt sich ein erhöhter Materialverbrauch und eine beschränkte Vergleichbarkeit der Messungen der spektroskopischen Eigenschaften und des spezifischen Gewichts. Zweitens ist das herkömmliche Verfahren mit einem hohen Zeitaufwand verbunden. Die langsame Messung, die ein sorgfältiges Einfüllen des Getreides in das Messrohr erfordert, ist unter den Bedingungen der Getreidetechnik, zum Beispiel nach der Ernte oder in einem Lager unpraktisch. Schließlich hat die herkömmliche Technik eine beschränkte Reproduzierbarkeit. Das relative Gewicht kann lediglich mit einer Genauigkeit von rund 10% ermittelt werden, was für eine Quantifizierung eines ggf. vorhandenen Insektenbefalls unzureichend ist.

Es sind auch Messgeräte (z. B. US 6 646 264 B1, WO 99/58959 A1, US 6 706 989 B2, DE 10 2005 052 769 A1 und DE 43 39 285 A1) für eine spektroskopische Messung und eine Gewichtsmessung an Saatgut bekannt, die jedoch nicht eine Massendichtebestimmung am Saatgut erlauben.

Die genannten Nachteile herkömmlicher Messungen an Getreide sind auch bei der Messung an anderen Proben in Form von Partikeln, wie zum Beispiel an anderen Pflanzenproben oder an Kunststoffgranulaten in der Kunststoffindustrie gegeben. Zum Beispiel kann es für die Qualitätsüberwachung erforderlich sein, zusätzlich zur chemischen Zusammensetzung von Kunststoffpartikeln mit spektroskopischen Messungen auch physikalische Parameter, wie zum Beispiel das spezifische Gewicht zu ermitteln.

Die Aufgabe der Erfindung ist es, ein verbessertes Messgerät zur Charakterisierung einer partikulären Probe bereitzustellen, mit dem die Nachteile der herkömmlichen Techniken vermieden werden. Das Messgerät soll insbesondere ermöglichen, dass zusätzlich zur spektroskopischen Messung weitere Messungen an der Probe mit erhöhter Genauigkeit und Reproduzierbarkeit erfasst werden können. Die Aufgabe der Erfindung ist es auch, ein verbessertes Messverfahren bereitzustellen, mit dem die Beschränkungen der herkömmlichen Techniken überwunden werden und das einen erweiterten Anwendungsbereich aufweist. Eine weitere Aufgabe der Erfindung ist es, Anwendungen des Messgeräts und des Messverfahrens anzugeben.

Diese Aufgaben werden durch ein Messgerät, eine Getreidefördereinrichtung und ein Verfahren mit den Merkmalen der unabhängigen Ansprüche gelöst. Vorteilhafte Ausführungsformen und Anwendungen der Erfindung ergeben sich aus den abhängigen Ansprüchen.

Vorrichtungsbezogen wird die Aufgabe der Erfindung insbesondere durch die technische Lehre gelöst, ein gattungsgemäßes Messgerät zur Messung von Eigenschaften einer Probe mit einer Vielzahl von Partikeln, das eine Spektroskopieeinrichtung für die Messung spektroskopischer Eigenschaften der Probe enthält, mit einer Waageeinrichtung bereitzustellen, mit der die Masse der Probe gemessen werden kann. Vorzugsweise sind die Spektroskopieeinrichtung und die Waageeinrichtung in ein gemeinsames Messgerät integriert. Die Spektroskopieeinrichtung und die Waageeinrichtung sind im Messgerät miteinander verbunden. Eine in das Messgerät eingeführte Probe kann mit dem Messgerät der spektroskopischen Messung und der Massemessung unterzogen werden.

Verfahrensbezogen wird die Aufgabe der Erfindung insbesondere durch die technische Lehre gelöst, Eigenschaften einer Probe mit einer Vielzahl von Partikeln zu messen, indem die Probe sowohl einer spektroskopischen Messung unterzogen als auch gewogen wird. Die spektroskopische Messung und die Wägung (Messung der Masse) können an einer identischen Probe erfolgen. Es können aufeinanderfolgende Messungen der spektroskopischen Eigenschaften und der Masse oder eine gleichzeitige Messung beider Größen vorgesehen sein.

Mit der Erfindung wird ausgenutzt, dass eine Probe für die spektroskopische Messung in einer Probenkammer angeordnet wird, durch die der Lichtweg der Spektroskopieeinrichtung verläuft. Die Probenkammer hat ein vorbestimmtes Volumen, das für die Messung an der Probe unveränderlich ist. Indem die Spektroskopieeinrichtung und die Waageeinrichtung verbunden werden, kann die Wägung an der Probe erfolgen, welche die Probenkammer der Spektroskopieeinrichtung ausfüllt. Aus der gemessenen Masse und dem bekannten Volumen der Probenkammer wird erfindungsgemäß das spezifische Gewicht der Probe unmittelbar berechnet. Die Messung spektroskopischer Eigenschaften und des spezifischen Gewichts kann damit erheblich beschleunigt werden. Messfehler durch die Verwendung verschiedener Probenteile oder durch die Anwendung der herkömmlichen Messrohr-Technik werden vermieden. Der Erfinder hat festgestellt, dass das spezifische Gewicht von Getreide mit einer erheblich höheren Genauigkeit von bis zu +/- 0,2 kg/hl ermittelt werden kann.

Mit dem Begriff "spektroskopische Eigenschaften" wird mindestens ein Parameter der Probe bezeichnet, der für die Wechselwirkung der Probe mit Licht, insbesondere bei mindestens einer Wellenlänge in einem Spektralbereich bezeichnet, der sich von UV-Wellenlängen über den sichtbaren Bereich bis zu IR-Wellenlängen erstreckt. Vorzugsweise ist die Spektroskopieeinrichtung zur Messung der Transmission, der optischen Dichte und/oder der Reflektion der Probe bei einer oder mehreren Wellenlängen eingerichtet.

Vorteilhafterweise bestehen verschiedene Varianten, die Spektroskopieeinrichtung und die Waageeinrichtung zu kombinieren. Beispielsweise kann die Waageeinrichtung unmittelbar mit der Probenkammer der Spektroskopieeinrichtung verbunden sein. In diesem Fall können die spektroskopischen Eigenschaften und die Masse der Probe gleichzeitig gemessen werden. Bevorzugt sind jedoch Ausführungsformen der Erfindung, bei der die Spektroskopieeinrichtung und die Waageeinrichtung aneinander grenzend, zum Beispiel übereinander oder nebeneinander, angeordnet sind, wobei die Probe vollständig zwischen der Spektroskopieeinrichtung und der Waageeinrichtung überführbar ist. Es kann beispielsweise vorgesehen sein, dass zuerst die spektroskopischen Eigenschaften und anschließend die Masse der Probe gemessen werden. Alternativ kann umgekehrt die Messung der spektroskopischen Eigenschaften nach der Wägung der Probe vorgesehen sein.

Vorzugsweise ist das erfindungsgemäße Messgerät mit einem Transportrad ausgestattet, mit dem die Probe in den Lichtweg der Spektroskopieeinrichtung förderbar ist. Vorteilhafterweise kann mit dem Transportrad die Probe von der Spektroskopieeinrichtung auf eine Probenaufnahme der Waageeinrichtung transportiert werden. Gemäß der Erfindung wird mindestens eine Kammer des Transportrades als Probenkammer für die Spektroskopieeinrichtung verwendet, wie dies beispielsweise in DE 103 32 800 A1 beschrieben ist. Das Transportrad erfüllt eine Dreifachfunktion. Erstens dient das Transportrad dem Transport der Probe in die Spektroskopieeinrichtung. Zweitens wird mit dem Transportrad die Probenkammer für die spektroskopische Messung und ein vorbestimmtes Volumen für die Wägung bereitgestellt. Drittens dient das Transportrad dem Transport der Probe von der Spektroskopieeinrichtung auf die Probenaufnahme der Waageeinrichtung. Schließlich kann das Transportrad auch für eine Verdichtungsbewegung vorgesehen sein, die in DE 103 32 800 A1 beschrieben ist.

Vorzugsweise ist die Waageeinrichtung so angeordnet, dass die Probe unter der Wirkung der Schwerkraft von der Spektroskopieeinrichtung, insbesondere von dem Transportrad, auf die Probenaufnahme der Waageeinrichtung bewegt werden kann. Die Probe bewegt sich durch einen freien Fall oder ein Gleiten auf einer geneigten Bahn von der Spektroskopieeinrichtung auf die Waageeinrichtung. Vorteilhafterweise kann damit die Messung beschleunigt und sichergestellt werden, dass die gesamte Probe sowohl der spektroskopischen Messung auch als der Wägung unterzogen wird.

Vorteilhafterweise können verschiedene Typen von Waageeinrichtungen verwendet werden. Beispielsweise kann die Waageeinrichtung eine Hebelwaage umfassen. In diesem Fall können sich Vorteile für die Integration der Waageeinrichtung in das Gehäuse des Messgeräts ergeben. Des Weiteren kann die Waageeinrichtung eine Federwaage umfassen, die Vorteile für die Bedienung und Reinigung der Waageeinrichtung haben kann. Es kann auch eine Kombination aus einer Hebel- und einer Federwaage vorgesehen sein.

Gemäß Erfindung ist das Messgerät mit einer Auswertungseinrichtung ausgestattet, mit der die Massendichte (oder: das spezifische Gewicht) der Probe erfassbar ist. Die Auswertungseinrichtung ist mit der Waageeinrichtung verbunden, um aus einem Messsignal der Waageeinrichtung, das für die Masse der gewogenen Probe charakteristisch ist, und dem Volumen der Probenkammer in der Spektroskopieeinrichtung die Massendichte der Probe zu berechnen.

Die erfindungsgemäße Messung ist allgemein an Proben aus partikelförmigen Naturprodukten, insbesondere landwirtschaftlichen Produkten in Form von Samen- oder Fruchtkörpern, wie zum Beispiel Getreide, Mais, Soja, Reis, oder an Proben aus synthetischen Partikeln, insbesondere Kunststoffpartikeln oder - granulaten anwendbar. Typische Partikelgrößen liegen im Bereich von 0,1 mm bis 20 mm, insbesondere von 1 mm bis 10 mm, besonders bevorzugt von 2 mm bis 8 mm. Besonders bevorzugt wird die Erfindung bei der Messung an landwirtschaftlichen Produkten angewendet. Hierzu ist das erfindungsgemäße Messgerät vorzugsweise Teil einer Fördereinrichtung für das landwirtschaftliche Produkt, zum Beispiel einer Getreidefördereinrichtung. Das erfindungsgemäße Messgerät kann zum Beispiel auf einer Erntemaschine, wie zum Beispiel einem Mähdre-scher oder einer Transportmaschine, wie zum Beispiel in einem Getreidelager, vorgesehen sein.

Gemäß einer weiteren Variante der Erfindung kann die Probe mehrere Teilproben umfassen, die der spektroskopischen Messung und der Wägung unterzogen werden. Die Teilproben können beispielsweise getrennt spektroskopisch gemessen und gewogen werden. Alternativ können die Teilproben getrennt spektroskopisch gemessen und gemeinsam gewogen werden. Besonders bevorzugt ist eine Ausführungsform der Erfindung, bei der das Transportrad zur Förderung der Probe im Messgerät mehrere Transportkammern umfasst, die jeweils zur Aufnahme einer Teilprobe vorgesehen sind. Die Teilproben werden mit dem Transportrad jeweils in den Lichtweg der Spektroskopieeinrichtung und von diesem auf die Probenaufnahme der Waageeinrichtung befördert. Vorzugsweise umfasst das Wägen der Probe eine Überführung einer Vielzahl von Getreideproben aus mehreren gefüllten Transportkammern auf die Probenaufnahme und die Ermittlung der Gesamtmasse der Teilproben.

Weitere Einzelheiten und Vorteile der Erfindung werden im Folgenden unter Bezug auf die beigefügten Zeichnungen beschrieben. Es zeigen:
- Figur 1:: eine schematische Illustration einer Aus- führungsform des erfindungsgemäßen Messge- räts; und
- Figuren 2 und 3:: schematische Schnittansichten verschiedener Varianten erfindungsgemäße verwendeter Waa- gen.

Ausführungsformen der Erfindung werden im Folgenden unter beispielhaftem Bezug auf die Messung an Getreide, insbesondere mit dem in DE 103 32 800 A1 beschriebenen Gerät erläutert. Es wird betont, dass die Umsetzung der Erfindung in der Praxis nicht auf die Ausstattung des herkömmlichen Geräts mit der Waageeinrichtung beschränkt, sondern entsprechend bei anderen Messgeräten möglich ist. Die Erfindung wird im Folgenden unter Bezug auf die Kombination der Spektroskopieeinrichtung mit der Waageeinrichtung beschrieben. Einzelheiten der spektroskopischen Messung, insbesondere des Transports der Probe in die Spektroskopieeinrichtung, des Aufbaus der Spektroskopieeinrichtung und der Auswertung der spektroskopischen Messung, sind an sich dem Fachmann aus der herkömmlichen Spektroskopietechnik und insbesondere den Patentanmeldungen DE 101 197 63 A1 und DE 103 32 800 A1, bekannt und werden daher hier nicht beschrieben.

Die Anwendung der Erfindung ist nicht auf die Messung an Getreide beschränkt, sondern entsprechend an anderen Pflanzenprodukten oder an synthetischen Partikeln möglich. Schließlich ist darauf hinzuweisen, dass die Ausführungsformen der Erfindung unter beispielhaftem Bezug auf ein Tischgerät zur Anwendung zum Beispiel in einem Laboratorium beschrieben wird. Alternativ kann die erfindungsgemäße Kombination einer Spektroskopieeinrichtung mit einer Waageeinrichtung an Maschinen der Getreidetechnik, die insbesondere mobil oder ortsfest betrieben werden, vorgesehen sein.

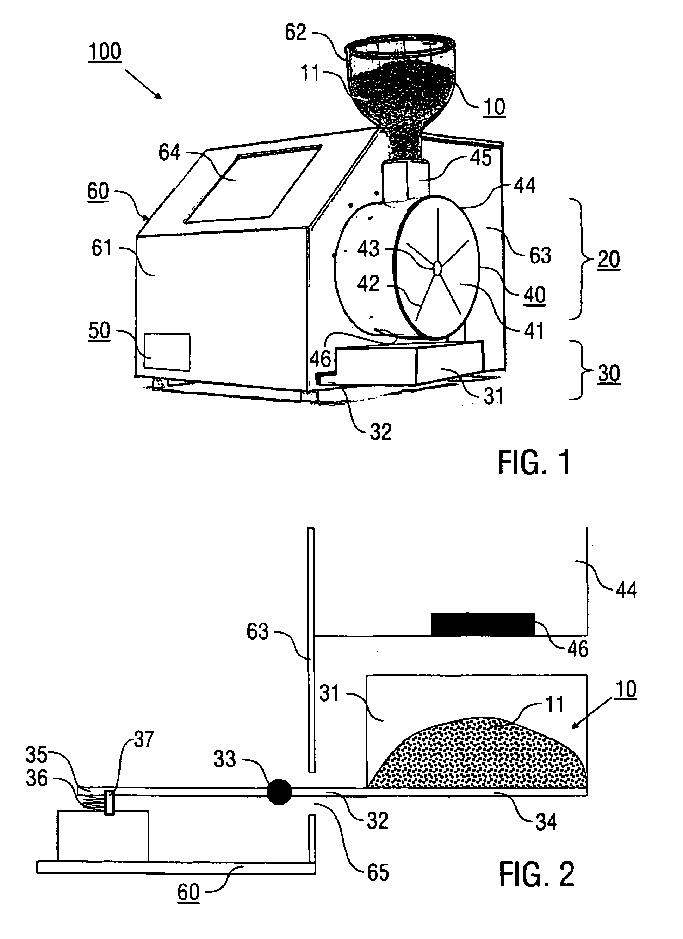

Figur 1 zeigt eine bevorzugte Ausführungsform des erfindungsgemäßen Messgeräts 100 zur Messung von Eigenschaften einer Probe 10 mit einer Vielzahl von Partikeln 11 mit einer Spektroskopieeinrichtung 20, einer Waageeinrichtung 30, einem Transportrad 40 und einer Auswertungseinrichtung 50. Die Komponenten 20 bis 50 sind an und/oder in einem Gehäuse 60 des Messgeräts 100 angeordnet.

Die Spektroskopieeinrichtung 20 umfasst eine Beleuchtungseinrichtung und eine Detektoreinrichtung (nicht dargestellt), zwischen denen ein Lichtweg durch eine Probenkammer verläuft. Die Probenkammer wird durch jeweils eine Transportkammer 41 des Transportrades 40 (Schaufelrad) gebildet. Vorteilhafterweise kann die spektroskopische Messung an der Probe (oder Teilprobe) in der Transportkammer 41 erfolgen. Einzelheiten der Zusammensetzung aus der Spektroskopieeinrichtung 20 und dem Transportrad 40 sind in DE 103 32 800 A1 beschrieben.

Das Transportrad 40 umfasst fünf Flügel 42, zwischen denen die Transportkammern 41 jeweils mit einem Volumen V_{TK} gebildet sind, in einem Transportradgehäuse 44. Die Flügel 42 sind ebene Platten, die von einem zentralen Träger 43 radial mit gleichen Winkelabständen abstehen. Die Flügel 42 (schematisch dargestellt) und die Beleuchtungs- oder Detektoreinheit der Spektroskopieeinrichtung 20 sind in dem Transportradgehäuse 44 angeordnet. Das Transportradgehäuse 44 weist eine obere Öffnung auf, durch welche die Probe 10 von einem Trichter 62 in die jeweils unter der oberen Öffnung 45 befindliche Transportkammer 41 fällt. Bei Betätigung des Transportrades 40 wird die jeweils mit der Probe gefüllte Transportkammer 41 in den Lichtweg der Detektoreinrichtung 20 bewegt, wo die spektroskopische Messung erfolgt. Dabei wird die nächste Transportkammer 41 an der oberen Öffnung 45 des Transportradgehäuses 44 befüllt. Bei den nächsten schrittweisen Betätigungen des Transportrades 40 wird nach der spektroskopischen Messung die Probe zu der unteren Öffnung 46 des Transportradgehäuses 44 bewegt, durch welche die Probe auf die Probenaufnahme 31 der Waageeinrichtung 30 fällt oder gleitet.

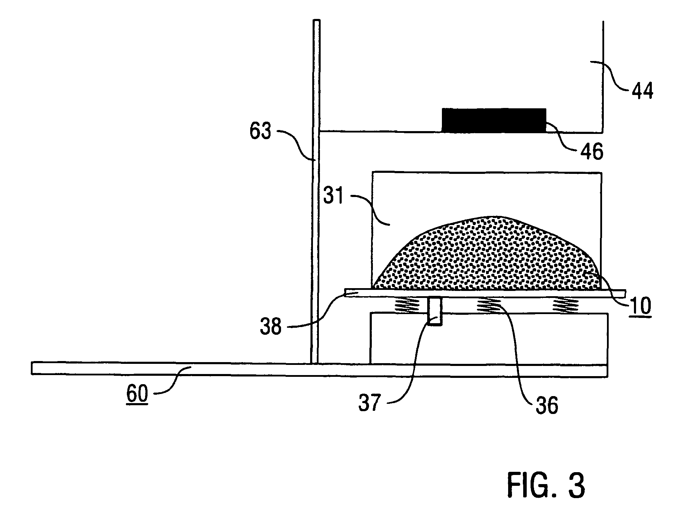

Die Waageeinrichtung 30 umfasst zum Beispiel eine Hebelwaage (Figuren 1, 2) oder eine Federwaage (Figur 3). Die Realisierung der Erfindung in der Praxis ist nicht auf diese Waagentypen beschränkt, sondern mit anderen, an sich bekannten Waagen zur Erfassung der Masse von Wägegut möglich. Einzelheiten der Waageeinrichtung 30 werden unten unter Bezug auf die Figuren 2 und 3 beschrieben.

Das Gehäuse 60 umfasst mehrere Gehäusewände. In einer vorderen Gehäusewand 61 ist ein Fenster für eine Anzeigeeinrichtung 64 angeordnet. Die Anzeigeeinrichtung 64 kann einen berührungsempfindlichen Bildschirm (Touch-Screen) umfassen, mit dem die Bedienung des Messgeräts 100 erfolgt. Mit einer Seitenwand 63 ist das Transportradgehäuse 44 verbunden. Unterhalb des Transportradgehäuses 44 weist die Seitenwand 63 eine Öffnung 65 zur Durchführung eines Hebelarms 32 der Waageeinrichtung 30 auf (siehe Figur 2).

Figur 1 zeigt zu illustrativen Zwecken an der vorderen Seitenwand 61 schematisch die Auswertungseinrichtung 50. In der Praxis kann die Auswertungseinrichtung 50 an jedem passenden Ort im oder außerhalb des Gehäuses 60 vorgesehen sein. Die Auswertungseinrichtung 50 kann zum Beispiel Teil eines Rechnerkreises sein, mit dem auch die Steuerung der Spektroskopieeinrichtung 20 und der Waageeinrichtung 30 erfolgen kann. Die Messsignale der Spektroskopieeinrichtung 20 und der Waageeinrichtung 30 können alternativ über eine Schnittstelle an eine externe Auswertungseinrichtung, wie zum Beispiel einen externen Rechner eingegeben werden.

Die erfindungsgemäße Ermittlung der Massendichte (spezifisches Gewicht) einer Getreideprobe erfolgt gemäß einer ersten Variante derart, dass die Probe in eine Transportkammer 41 des Transportrades 40 gefüllt und in den Lichtweg der Spektroskopieeinrichtung 20 bewegt wird. Nach der spektroskopischen Messung wird die Probe auf die Probenaufnahme 31 der Waageeinrichtung 30 geschüttet, um die Masse der Probe zu messen. Mit dem bekannten Volumen V_{TK} der Transportkammer 41 und der gemessenen Masse m ergibt sich das spezifische Gewicht gemäß ρ = m/V_{TK}. Gemäß einer zweiten Variante werden aufeinanderfolgend in mehreren Transportkammern 41 mehrere Teilproben spektroskopisch gemessen und aufeinanderfolgend auf die Probenaufnahme 31 bewegt. Mit der gemessenen Gesamtmasse M ergibt sich das spezifische Gewicht in diesem Fall gemäß ρ = M/(n·V_{TK}). Vorzugsweise wird die Anzahl n der jeweils in einer gesonderten Transportkammer 41 gemessenen Teilproben gleich der Gesamtzahl der Transportkammern 41 des Transportrades 40 gewählt. Somit können vorteilhafterweise potenzielle Fehler durch Volumendifferenzen der einzelnen Transportkammern vermieden werden.

Die Genauigkeit der ermittelten Massendichte kann noch verbessert werden, indem die Messung an Teilproben wiederholt wird. Beispielsweise kann die Messung mit einem Transportrad 40 mit fünf Transportkammern 41 (d.h. mit fünf Teilmessungen je Probe) mit fünf Proben wiederholt werden, so dass bei der spektroskopischen Messung insgesamt 25 Messwerte berücksichtigt werden. In Abhängigkeit von der geforderten Messgenauigkeit kann die Anzahl der Teilmessungen noch erhöht werden.

Die Waageeinrichtung 30 kann eine Hebelwaage umfassen, die in schematischer Querschnittsansicht in Figur 2 illustriert ist. Die Waageeinrichtung umfasst in diesem Fall einen Waagearm 32, der um eine Drehachse 33 verschwenkbar angeordnet ist und dessen freies Ende 34 eine Probenaufnahme 31 trägt, während das entgegengesetzte Ende 35 über ein elastisch deformierbares Kraftelement 36, wie zum Beispiel ein Federelement mit dem Gehäuse 60 verbunden ist. Die Drehachse 33 kann innerhalb (wie dargestellt) oder außerhalb des Gehäuses 60 angeordnet sein. Der Hebelarm 32 ragt durch die Öffnung 65 der Seitenwand 63 des Gehäuses derart nach außen, dass die Probenaufnahme 31 unterhalb der unteren Öffnung 46 des Transportradgehäuses 44 angeordnet ist. Das Kraftelement 36 ist mit einem Sensor 37, wie zum Beispiel einem Dehnungsmessstreifen ausgestattet, um bei Beladung der Probenaufnahme 31 mit der Probe 10 die Verschwenkung des Hebelarms 32 zu erfassen. Aus dem Signal des Sensors 37 kann mit der Auswertungseinrichtung 50 (Figur 1) die Masse der Probe 10 ermittelt werden.

Gemäß Figur 3 umfasst die Waageeinrichtung 30 eine Federwaage, bei der die Probenaufnahme 31 auf einer Plattform 38 angeordnet ist, die über Kraftelemente, zum Beispiel Spiralfedern 36 mit der ortsfesten Bodenplatte des Gehäuses 60 verbunden ist. Mit einem Sensor 37, zum Beispiel einem Dehnungsmessstreifen kann die Verschiebung der Plattform 38 bei Beladung der Probenaufnahme 31 mit der Probe 10 ermittelt werden.

Abweichend von den gezeigten Ausführungsformen der Erfindung kann die Waageeinrichtung 30 so gebildet sein, dass die Probenaufnahme 31 und die übrigen Teile der Waageeinrichtung innerhalb des Gehäuses 60 angeordnet sind. In diesem Fall können sich Vorteile für einen verbesserten Schutz der Waageeinrichtung gegen Verunreinigungen oder mechanische Beschädigungen ergeben. Zur Überführung der Probe von dem Transportrad 40 auf die Probenaufnahme 31 ist in diesem Fall eine Rutsche vorgesehen, die eine Bahn von der unteren Öffnung 46 des Transportradgehäuses 44 zur Probenaufnahme 31 der Waageeinrichtung 30 innerhalb des Gehäuses 60 bildet.

Die Erfindung ist nicht auf die vorstehend beschriebenen bevorzugten Ausführungsbeispiele, sondern durch den Schutzumfang der angehängten Ansprüche beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Messgerät (100) zur Messung von Eigenschaften einer Probe (10) mit einer Vielzahl von Partikeln (11), umfassend:
- eine Spektroskopieeinrichtung (20), mit der spektroskopische Eigenschaften der Probe messbar sind, und
- eine Waageeinrichtung (30), mit der die Masse der Probe messbar ist,
**dadurch gekennzeichnet, dass**
- eine Probenkammer (41) vorgesehen ist, in der die Probe in der Spektroskopieeinrichtung (20) angeordnet werden kann und die ein vorbestimmtes Volumen aufweist, das für die Messung an der Probe unveränderlich ist,
- die Spektroskopieeinrichtung (20) und die Waageeinrichtung (30) so angeordnet sind, dass die Probe vollständig von der Probenkammer (41) der Spektroskopieeinrichtung (20) auf die Waageeinrichtung (30) überführbar ist, so dass die Masse der Probe messbar ist, welche die Probenkammer (41) der Spektroskopieeinrichtung (20) ausfüllt,
- eine Auswertungseinrichtung (50) vorgesehen ist, mit der die Massendichte der Probe (10) aus der gemessenen Masse und dem Volumen der Probenkammer (41) erfassbar ist.

2. Messgerät nach Anspruch 1, bei dem
- ein Transportrad (40) mit mindestens einer Transportkammer (41) vorgesehen ist, welche die Probenkammer bildet, wobei die Probe (10) mit dem Transportrad (40) in einen Lichtweg der Spektroskopieeinrichtung (20) und von der Spektroskopieeinrichtung (20) auf eine Probenaufnahme (31) der Waageeinrichtung (30) transportierbar ist.

3. Messgerät nach Anspruch 2, bei dem
- die Waageeinrichtung (30) so angeordnet ist, dass die Probe (10) unter der Wirkung der Schwerkraft von dem Transportrad (40) auf die Probenaufnahme (31) bewegt werden kann.

4. Messgerät nach Anspruch 3, bei dem
- das Transportrad (40) mehrere Transportkammern (41) aufweist, und
- die Waageeinrichtung (30) zum Wägen der Probe derart konfiguriert ist, dass aufeinanderfolgend Teilproben aus allen gefüllten Transportkammern (41) auf die Probenaufnahme (31) überführt werden.

5. Messgerät nach einem der vorhergehenden Ansprüche, bei dem
- die Waageeinrichtung (30) eine Hebel- und/oder eine Federwaage (32, 33) umfasst.

6. Messgerät nach einem der vorhergehenden Ansprüche, bei dem
- die Spektroskopieeinrichtung (20) zur Messung der Transmission, der optischen Dichte und/oder der Reflektion der Probe (10) eingerichtet ist.

7. Messgerät nach einem der vorhergehenden Ansprüche, die Teil einer Getreidefördereinrichtung ist.

8. Verfahren zur Messung von Eigenschaften einer Probe (10) mit einer Vielzahl von Partikeln (11), mit den Schritten:
- Messen von spektroskopischen Eigenschaften der Probe mit einer Spektroskopieeinrichtung (20), und
- Wägen der Probe mit einer Waageeinrichtung (30)
**dadurch gekennzeichnet, dass**
- die Probe in einer Probenkammer (41) der Spektroskopieeinrichtung (20) angeordnet wird, wobei die Probenkammer (41) ein vorbestimmtes Volumen aufweist, das für die Messung an der Probe unveränderlich ist,
- die Probe vollständig von der Probenkammer (41) der Spektroskopieeinrichtung (20) auf die Waageeinrichtung (30) überführt wird, so dass die Masse der Probe messbar ist, welche die Probenkammer (41) der Spektroskopieeinrichtung (20) ausfüllt, und
- eine Ermittlung der Massendichte der Probe (10) aus der gemessenen Masse und dem Volumen der Probenkammer (41) vorgesehen ist.

9. Verfahren nach Anspruch 8, bei dem
- die Probe (10) mit einem Transportrad (40), das mindestens eine Transportkammer (41) aufweist, welche die Probenkammer bildet, in einen Lichtweg der Spektroskopieeinrichtung (20) und von der Spektroskopieeinrichtung (20) auf eine Probenaufnahme (31) der Waageeinrichtung (30) transportiert wird.

10. Verfahren nach einem der Ansprüche 8 bis 9, bei dem
- das Transportrad (40) mehrere Transportkammern (41) umfasst und das Wägen der Probe mit der Waageeinrichtung (30) eine Überführung von mindestens einer Teilprobe aus mindestens einer der Transportkammern (41) auf die Probenaufnahme (31) umfasst.

11. Verfahren nach Anspruch 10, bei dem
- das Wägen der Probe mit der Waageeinrichtung (30) eine Überführung von Teilproben aus allen gefüllten Transportkammern (41) auf die Probenaufnahme (31) umfasst.

12. Verfahren nach einem der Ansprüche 8 bis 11, bei dem
- die Probe (10) unter der Wirkung der Schwerkraft von dem Transportrad (40) auf die Probenaufnahme (31) bewegt wird.

13. Verfahren nach einem der Ansprüche 8 bis 12, bei dem
- das Messen der spektroskopischen Eigenschaften der Probe einer Messung der Transmission, der optischen Dichte und/oder der Reflektion der Probe (10) umfasst.

14. Verfahren nach einem der Ansprüche 8 bis 13, bei dem
- die Probe (10) partikelförmige landwirtschaftliche Produkte, insbesondere Getreide, oder synthetische Partikel umfasst.

## Claims

1. A measuring instrument (100) for measuring properties of a sample (10) with a multitude of particles (11), comprising:
- a spectroscopy device (20) with which spectroscopic properties of the sample can be measured, and
- a weighing device (30) with which the mass of the sample can be measured,
**characterized in that**
- a sample chamber (41) is provided, in which the sample can be arranged in the spectroscopy device (20) and which has a predetermined volume, which cannot be changed for measuring the sample,
- the spectroscopy device (20) and the weighing device (30) are arranged such that the sample is completely transferable from the sample chamber (41) of the spectroscopy device (20) to the weighing device (30), such that the mass of the sample can be measured, which fills the sample chamber (41) of the spectroscopy device (20),
- an evaluation device (50) is provided, with which the mass density of the sample (10) can be determined from the measured mass and the volume of the sample chamber (41).

2. The measuring instrument according to claim 1, in which
- a transport wheel (40) with at least one transport chamber (41), which provides the sample chamber, wherein the sample (10) can be transported with the transport wheel (40) into a light path of the spectroscopy device (20) and from the spectroscopy device (20) to a sample holder (31) of the weighing device (30).

3. The measuring instrument according to claim 2, in which
- the weighing device (30) is arranged such that the sample (10) can be moved under the influence of gravity from the transport wheel (40) to the sample holder (31).

4. The measuring instrument according to claim 3, in which
- the transport wheel (40) has several transport chambers (41), and
- the weighing device (30) is configured for weighing of the sample in such a way that successive partial samples are transferred from all filled transport chambers (41) to the sample holder (31).

5. The measuring instrument according to one of the foregoing claims, in which
- the weighing device (30) comprises a lever and/or a spring balance (32, 33).

6. The measuring instrument according to one of the foregoing claims, in which
- the spectroscopy device (20) is set up for the measurement of the transmission, the optical density and/or the reflection of the sample (10).

7. The measuring instrument according to one of the foregoing claims, which is part of a grain transporting device.

8. A method for measurement of properties of a sample (10) with a multitude of particles (11), with the steps:
- measuring of spectroscopic properties of the sample with a spectroscopy device (20), and
- weighing the sample with a weighing device (30)
**characterized in that**
- the sample is arranged in a sample chamber (41) of the spectroscopy device (20), wherein the sample chamber (41) has a predetermined volume, which cannot be changed for measuring the sample,
- the sample is completely transferred from the sample chamber (41) of the spectroscopy device (20) onto the weighing device (30), such that the mass of the sample can be measured, which fills the sample chamber (41) of the spectroscopy device (20), and
- a determination of the mass density of the sample (10) from the measured mass and the volume of the sample chamber (41) is provided.

9. The method according to claim 8, in which
- the sample (10) is transported with a transport wheel (40), which has at least one transport chamber (41), which provides the sample chamber, into a light path of the spectroscopy device (20) and from the spectroscopy device (20) to a sample holder (31) of the weighing device (30).

10. The method according to one of the claims 8 to 9, in which
- the transport wheel (40) comprises several transport chambers (41) and the weighing of the sample with the weighing device (30) comprises a transfer of at least one partial sample from at least one of the transport chambers (41) to the sample holder (31).

11. The method according to claim 10, in which
- the weighing of the sample with the weighing device (30) comprises a transfer of partial samples from all filled transport chambers (41) to the sample holder (31).

12. The method according to one of the claims 8 to 11, in which
- the sample (10) is moved under the influence of gravity from the transport wheel (40) to the sample holder (31).

13. The method according to one of the claims 8 to 12, in which
- the measuring of the spectroscopic properties of the sample comprises a measurement of the transmission, the optical density and/or the reflection of the sample (10).

14. The method according to one of the claims 8 to 13, in which
- the sample (10) comprises particle-shaped agricultural products, in particular grain, or synthetic particles.

## Revendications

1. Appareil de mesure (100) pour la mesure de caractéristiques d'un échantillon (10) comportant une pluralité de particules (11), comprenant :
- un dispositif de spectroscopie (20) permettant de mesurer des propriétés spectroscopiques de l'échantillon, et
- un dispositif de pesage (30) permettant de déterminer la masse de l'échantillon,
**caractérisé en ce que**
- il est prévu une chambre (41) à échantillon où l'échantillon peut être mis en place dans le dispositif de spectroscopie (20), et qui présente un volume prédéfini, invariable pour la mesure sur l'échantillon,
- le dispositif de spectroscopie (20) et le dispositif de pesage (30) sont disposés de manière à permettre le transfert intégral de l'échantillon de la chambre (41) à échantillon du dispositif de spectroscopie (20) au dispositif de pesage (30) ou inversement, rendant ainsi possible la mesure de la masse de l'échantillon qui remplit la chambre (41) à échantillon du dispositif de spectroscopie (20),
- il est prévu un dispositif d'analyse (50) permettant de déterminer la densité massique de l'échantillon (10) à partir de la masse mesurée et du volume de la chambre (41) à échantillon.

2. Appareil de mesure selon la revendication 1, où
- il est prévu une roue de transport (40) comportant au moins un compartiment de transport (41) formant la chambre à échantillon, l'échantillon (10) pouvant être transporté par la roue de transport (40) vers un chemin optique du dispositif de spectroscopie (20), et du dispositif de spectroscopie (20) à une réception d'échantillon (31) du dispositif de pesage (30).

3. Appareil de mesure selon la revendication 2, où
- le dispositif de pesage (30) est disposé de manière à pouvoir déplacer l'échantillon (10) sous l'effet de la force de gravité, de la roue de transport (40) à la réception d'échantillon (31).

4. Appareil de mesure selon la revendication 3, où
- la roue de transport (40) comporte plusieurs compartiments de transport (41), et où
- le dispositif de pesage (30) est prévu pour le pesage de l'échantillon, de telle manière que des échantillons partiels successifs sont transférés de tous les compartiments de transport (41) remplis vers la réception d'échantillon (31).

5. Appareil de mesure selon l'une des revendications précédentes, où
- le dispositif de pesage (30) comprend une balance à levier et/ou à ressort (32, 33).

6. Appareil de mesure selon l'une des revendications précédentes, où
- le dispositif de spectroscopie (20) est prévu pour la mesure de transmission, de densité optique et/ou de réflexion de l'échantillon (10).

7. Appareil de mesure selon l'une des revendications précédentes, faisant partie d'un dispositif de transport de céréales.

8. Procédé de mesure de caractéristiques d'un échantillon (10) comportant une pluralité de particules (11), comprenant les étapes suivantes :
- mesure des propriétés spectroscopiques de l'échantillon au moyen d'un dispositif de spectroscopie (20), et
- pesage de l'échantillon au moyen d'un dispositif de pesage (30),
**caractérisé en ce que**
- l'échantillon est disposé dans une chambre (41) à échantillon du dispositif de spectroscopie (20), ladite chambre (41) à échantillon présentant un volume prédéfini, invariable pour la mesure sur l'échantillon,
- l'échantillon est intégralement transféré de la chambre (41) d'échantillon du dispositif de spectroscopie (20) au dispositif de pesage (30), rendant ainsi possible la mesure de la masse de l'échantillon qui remplit la chambre (41) à échantillon du dispositif de spectroscopie (20), et
- il est prévu de déterminer la densité massique de l'échantillon (10) à partir de la masse mesurée et du volume de la chambre (41) à échantillon.

9. Procédé selon la revendication 8, où
- l'échantillon (10) est transporté par une roue de transport (40) comportant au moins un compartiment de transport (41) formant la chambre à échantillon vers un chemin optique du dispositif de spectroscopie (20), et du dispositif de spectroscopie (20) à une réception d'échantillon (31) du dispositif de pesage (30).

10. Procédé selon la revendication 8 ou 9, où
- la roue de transport (40) comprend plusieurs compartiments de transport (41), et où le pesage de l'échantillon par le dispositif de pesage (30) comprend un transfert d'au moins un échantillon partiel d'au moins un des compartiments de transport (41) vers la réception d'échantillon (31).

11. Procédé selon la revendication 10, où
- le pesage de l'échantillon par le dispositif de pesage (30) comprend un transfert d'échantillons partiels de tous les compartiments de transport (41) remplis vers la réception d'échantillon (31).

12. Procédé selon l'une des revendications 8 à 11, où
- l'échantillon (10) est déplacé sous l'effet de la force de gravité, de la roue de transport (40) à la réception d'échantillon (31).

13. Procédé selon l'une des revendications 8 à 12, où
- la mesure des propriétés spectroscopiques de l'échantillon comprend une mesure de transmission, de densité optique et/ou de réflexion de l'échantillon (10).

14. Procédé selon l'une des revendications 8 à 13, où
- l'échantillon (10) comprend des produits agricoles se présentant sous forme particulaire, en particulier des céréales, ou des particules synthétiques.
